# EUROPÄISCHE PATENTSCHRIFT

(11) **EP 3 850 236 B1**
(45) Veröffentlichungstag und Bekanntmachung des Hinweises auf die Patenterteilung: **24.05.2023**
(21) Anmeldenummer: 19759286.8
(22) Anmeldetag: 15.08.2019
(51) Int. Cl.: F16D 13/64, F16D 43/14, F16D 43/26, F16D 47/02, F16D 11/00

(54) **REIBUNGSKUPPLUNG**
FRICTION CLUTCH
EMBRAYAGE À FRICTION

(30) Priorität: 13.09.2018 DE 102018122385
(43) Veröffentlichungstag der Anmeldung: 21.07.2021
(73) Patentinhaber: Schaeffler Technologies AG & Co. KG, 91074 Herzogenaurach (DE)
(72) Erfinder: RABER, Christoph, 66564 Ottweiler-Steinbach (DE)
(86) Internationale Anmeldenummer: PCT/DE2019/100736
(87) Internationale Veröffentlichungsnummer: WO 2020/052704

(56) Entgegenhaltungen:
- DE-A1-102006 055 541
- DE-A1-102018 103 521
- US-B2- 9 416 825

## Beschreibung

Die Erfindung betrifft eine Reibungskupplung zur schaltbaren Übertragung von Drehmomenten zwischen einer Eingangsseite und einer Ausgangsseite gemäß dem Oberbegriff des Anspruchs 1. Die Erfindung betrifft weiter ein Hybridmodul zumindest umfassend eine Reibungskupplung und einen elektrischen Antrieb.

Aus der nachveröffentlichten DE 10 2018 103 521.7 ist ein Hybridmodul mit einer Reibungskupplung bekannt, wobei die Reibungskupplung als Lamellenkupplung ausgeführt ist. Lamellen der Lamellenkupplung bilden reibschlüssige Verbindungen miteinander aus. Bei Erhöhung einer entlang der Drehachse wirkenden Betätigungskraft kann zusätzlich zu den reibschlüssigen Verbindungen zwischen benachbart zueinander angeordneten Lamellen eine formschlüssige Verbindung ausgebildet werden. Damit ist über eine kleine Reibungskupplung ein hohes Drehmoment übertragbar.

Aus dem Stand der Technik sind Hybridmodule bekannt, durch die ein Drehmoment einer (zusätzlichen) elektrischen Maschine in den Antriebsstrang eines Kraftfahrzeugs, umfassend z. B. eine Verbrennungskraftmaschine mit einer Antriebswelle als eine Antriebseinheit und ein Getriebe mit einer Getriebewelle, einkuppelbar ist. Das Hybridmodul umfasst einen Anschluss für oder umfasst die (zusätzliche) elektrische Maschine und eine Reibungskupplung zum lösbaren Einkuppeln der elektrischen Maschine für eine Drehmomentübertragung.

In Antriebssträngen, in denen zwei Antriebseinheiten, z. B. eine Verbrennungskraftmaschine und eine elektrische Maschine, miteinander schaltbar drehmomentübertragend verbindbar sein sollen, können Zustände existieren, bei denen ein Unterschied zwischen im Zugbetrieb (z. B. Verbrennungskraftmaschine treibt elektrische Maschine an) und Schubbetrieb (z. B. elektrische Maschine treibt Verbrennungskraftmaschine an) zu übertragenden Drehmomenten sehr groß ist. Hierbei ist eine Reibungskupplung für die Übertragung der höheren Drehmomente auszulegen, wobei ein erforderlicher Bauraum der Reibungskupplung möglichst gering sein soll.

Aus der US 9 416 825 B2 ist eine Reibungskupplung bekannt, die auf den Oberbegriff des Anspruchs 1 lesbar ist.

Der vorliegenden Erfindung liegt die Aufgabe zugrunde, die eingangs geschilderten Probleme zumindest teilweise zu lindern. Insbesondere soll eine möglichst kleine und kompakt bauende Reibungskupplung bzw. ein kompakt bauendes Hybridmodul vorgeschlagen werden.

Diese Aufgabe wird gelöst mit einer Reibungskupplung gemäß den Merkmalen des unabhängigen Anspruchs 1. Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Es wird eine Reibungskupplung zur Übertragung von Drehmomenten zwischen einer Eingangsseite und einer Ausgangsseite vorgeschlagen. Die Reibungskupplung umfasst zumindest eine Drehachse, mindestens eine mit einem Innenkorb gegenüber einer Umfangsrichtung formschlüssig verbundene Innenlamelle und mindestens eine mit einem Außenkorb gegenüber der Umfangsrichtung formschlüssig verbundene Au-ßenlamelle, wobei zumindest zwischen der Innenlamelle und der Außenlamelle eine gegenüber der Umfangsrichtung reibschlüssige Verbindung schaltbar herstellbar ist. Zusätzlich ist eine Formschlusseinheit vorgesehen, die (unmittelbar) mit dem einen von Innenkorb und Außenkorb gegenüber der Umfangsrichtung dauerhaft formschlüssig verbunden ist und in Abhängigkeit von einer Drehmomentdifferenz zwischen Eingangsseite und Ausgangsseite mindestens eine gegenüber der Umfangsrichtung formschlüssige Verbindung mit dem anderen von Außenkorb und Innenkorb ausbildet.

Die vorgeschlagene Reibungskupplung kann insbesondere zur schaltbaren Verbindung von mehreren Antriebseinheiten (z. B. Verbrennungskraftmaschine, elektrische Maschinen, Generatoren, etc.) eingesetzt werden.

Formschlüssige Verbindungen entstehen insbesondere durch das Ineinandergreifen von mindestens zwei Verbindungspartnern. Dadurch können sich die Verbindungspartner auch ohne oder bei unterbrochener Kraftübertragung nicht lösen. Anders ausgedrückt ist bei einer formschlüssigen Verbindung der eine Verbindungspartner dem anderen im Weg.

Kraftschlüssige bzw. reibschlüssige Verbindungen setzen eine Normal-Kraft auf die miteinander zu verbindenden Flächen voraus. Ihre gegenseitige Verschiebung ist verhindert, solange die durch die Haftreibung bewirkte Gegen-Kraft nicht überschritten wird. Der Kraft- beziehungsweise Reibschluss ist verloren und die Flächen rutschen aufeinander, wenn die tangential wirkende Last-Kraft größer als die Haftreibungs-Kraft ist.

Eine elektrische Maschine kann z. B. achsparallel zu der Drehachse bzw. einer Antriebsachse einer Verbrennungskraftmaschine angeordnet und mittels eines Zugmitteltriebs, beispielsweise ein (Keil-) Riementrieb, mit einer Getriebewelle und/oder der Antriebswelle verbunden sein, wobei die Reibungskupplung zwischengeschaltet ist. Gemäß einer anderen Ausführungsform kann eine elektrische Maschine koaxial zu der Drehachse bzw. der Antriebsachse, also fluchtend mit der Antriebswelle, angeordnet sein, wobei die Reibungskupplung verbunden mit dem Rotor der elektrischen Maschine im Zentrum der elektrischen Maschine angeordnet ist.

In einer Konfiguration, bei welcher die Reibungskupplung mit der Antriebswelle lösbar verbunden ist, wird diese Reibungskupplung auch als K0 [Kupplung-Null] bezeichnet. In einer Konfiguration, bei welcher die Reibungskupplung mit der Getriebewelle lösbar verbunden ist, wird diese Reibkupplung auch als K1 [Kupplung-Eins] bezeichnet.

Mit einer elektrischen Maschine ist z. B. ein Drehmoment auf die Antriebswelle und/oder auf die Getriebewelle übertragbar, wodurch ein von der Antriebswelle abgegebenes Drehmoment überlagerbar ist, also ein sogenanntes Boosten stattfindet. In einigen Anwendungen ist auch ein Anlassen der Verbrennungskraftmaschine, also ein Anschleppen der Antriebswelle aus dem Stand, mittels der elektrischen Maschine ermöglicht. Weiterhin ist bei einigen Anwendungen die elektrische Maschine als Generator betreibbar, also zur Umwandlung eines von außen eingegebenen Drehmoments in elektrische Energie eingerichtet. Das von außen eingebrachte Drehmoment wird von dem Getriebe, also zur Rekuperation, oder der Verbrennungskraftmaschine eingebracht, wobei die elektrische Energie direkt oder über einen Speicher an einen elektrischen Verbraucher abgebbar ist.

In einigen Anwendungen kann eine weitere elektrische Maschine als elektrischer Antriebsmotor vorgesehen sein, mittels welchem ein (beispielsweise rein) elektrisches Fahren möglich ist. Der elektrische Antriebsmotor gibt ein Drehmoment parallel zu der Verbrennungskraftmaschine oder alleine an das Getriebe ab. Letzteres wird als rein elektrisches Fahren bezeichnet. Die Verbrennungskraftmaschine dient dann als Energiequelle, beispielsweise als sogenannter Range-Extender, wenn die elektrischen Speicher nicht mehr ausreichend Energie bereithalten. Dies geschieht in Form einer Drehmomentabgabe an das Getriebe und/oder einem Aufladen des elektrischen Speichers über die elektrische Maschine des Hybridmoduls. Sollen die entsprechenden Schaltzustände der Verbrennungskraftmaschine beide separat zur Verfügung stehen, wird sowohl eine K0-Kupplung als auch eine K1-Kupplung benötigt, wobei die Reibungskupplung des Hybridmoduls dann die K0-Kupplung bildet und die K1-Kupplung im Drehmomentstrang ausgehend von der Antriebswelle hin zu dem Getriebe dem Hybridmodul nachgeschaltet ist.

In vielen Anwendungen ist es erwünscht, die Reibungskupplung des Hybridmoduls mit einem geringen Außendurchmesser auszuführen. Um dennoch erforderliche Drehmomente übertragen zu können, wird daher bevorzugt eine Lamellenkupplung eingesetzt, wobei bevorzugt eine trockene Lamellenkupplung eingesetzt wird, welche einfacher in der Umsetzung und eine ausreichende Verschleißresistenz für den Anwendungsfall aufweist. Zudem ist in der Regel der Wirkungsgrad aufgrund der geringeren mitrotierenden Masse im Vergleich zu einer nassen Lamellenkupplung, bei der die Kühlflüssigkeit mitgeschleppt wird, höher.

Eine Lamellenkupplung weist insbesondere zumindest eine Reiblamelle und eine korrespondierende Anzahl (nicht zwingend gleiche Anzahl) von Gegenlamellen auf, die zur Übertragung eines Drehmoments entlang der Drehachse verlagerbar und so miteinander verpressbar sind. Beispielsweise wird die Anpresskraft über ein Hebelelement bereitgestellt. Die Reiblamellen sind dazu in einen Lamellenkorb, beispielsweise den sogenannten Außenkorb, axial verschiebbar eingehängt. Die Gegenlamellen sind in einen weiteren Lamellenkorb, entsprechend beispielsweise dem sogenannten Innenkorb, axial verschiebbar eingehängt.

Zum Übertragen eines Drehmoments werden die Lamellen des Lamellenpakets insbesondere axial (also entlang der Drehachse) miteinander verpresst, so dass zwischen den Lamellen reibschlüssige Verbindungen ausgebildet werden. Soll kein Drehmoment übertragen werden, werden die Lamellen des Lamellenpakets axial voneinander beabstandet, beispielsweise indem ein Zentralausrücker das Hebelelement auslenkt und somit die Einleitung der Anpresskraft von dem Hebelelement auf das Lamellenpaket unterbindet. Die Lamellen beabstanden sich insbesondere nach Art einer Rutschkupplung selbsttätig infolge gegenläufig anliegender Drehmomente oder werden von einer Federeinrichtung aktiv voneinander getrennt. Ein Trennen bedeutet, dass tatsächlich dann kein Kontakt mehr vorliegt, also auch kein Drehmoment übertragbar ist, oder dass die verbleibende entlang der Drehachse wirkende Anpresskraft in Richtung der das Lamellenpaket verpressenden Federkraft derart gering ist, dass das noch immer übertragbare Schleppmoment vernachlässigbar oder zumindest für die Gegenkräfte im System ausreichend gering ist. Beispielsweise ist das dann übertragbare Drehmoment derart gering, dass eine elektrische Maschine von dem übertragbaren Drehmoment nicht in Rotation versetzbar ist.

Die Reibungskupplung ist insbesondere eine Lamellenkupplung, insbesondere eine trockene Lamellenkupplung. Die Reibungskupplung wird bevorzugt in den eingangs geschilderten Anwendungsfällen, insbesondere als K0-Kupplung, eingesetzt.

Die Eingangsseite und die Ausgangsseite bilden insbesondere Anschlüsse zur Einleitung oder Weiterleitung von durch die Reibungskupplung übertragbaren Drehmomenten. Z. B. können die Eingangsseite und die Ausgangsseite mit jedem von einer Antriebswelle, einer Getriebeeingangswelle, einer Anschlusswelle, etc. verbunden sein.

Bei der vorgeschlagenen Reibungskupplung soll bei Überschreiten einer Drehmomentdifferenz zwischen Eingangsseite und Ausgangseite durch die Formschlusseinheit eine formschlüssige Verbindung zwischen Innenkorb und Außenkorb hergestellt werden, so dass auch höhere Drehmomente übertragbar sind. Damit können einerseits geringere Drehmomente (z. B. bis höchstens ca. 200 Newtonmeter) über die reibschlüssigen Verbindungen der Innen- und Außenlamellen übertragen werden, wobei deutlich höhere Drehmomente (z. B. um einen Faktor von mindestens 1,5 bzw. mindestens zwei (2) oder sogar mindestens drei (3) höhere Drehmomente als das über die reibschlüssigen Verbindungen übertragbare Drehmoment) über die formschlüssige Verbindung übertragbar sind.

Insbesondere soll die formschlüssige Verbindung z. B. nur in einem von Schub- und Zugbetrieb der Reibungskupplung bildbar sein. Insbesondere soll die Übertragung eines Drehmoments z. B. im Schubbetrieb ausschließlich über die reibschlüssigen Verbindungen erfolgen, während im Zugbetrieb - und bei Überschreiten einer vorgebbaren Drehmomentdifferenz - ein Drehmoment (zusätzlich) über die (mindestens eine) formschlüssige Verbindung übertragen wird.

Die mindestens eine formschlüssige Verbindung ist durch die Verlagerung eines Mitnehmerelements der Formschlusseinheit zumindest entlang einer radialen Richtung herstellbar.

Die Formschlusseinheit weist zumindest eine erste Lamelle und eine zweite Lamelle sowie zwischen diesen Lamellen das mindestens eine Mitnehmerelement auf.

Die Lamellen sind insbesondere ringförmig und in der Umfangsrichtung geschlossen ausgeführt. Die Lamellen der Formschlusseinheit können z. B. in einer bekannten Lamellenkupplung anstatt einer oder mehrerer Außen- oder Innenlamellen eingesetzt werden.

Insbesondere ist nur die erste Lamelle (unmittelbar) mit dem Innenkorb oder Außenkorb dauerhaft formschlüssig verbunden. Die zweite Lamelle ist dann insbesondere mit keinem von Innenkorb oder Außenkorb (unmittelbar) formschlüssig verbunden.

Insbesondere bildet die zweite Lamelle auf einer von der ersten Lamelle wegweisenden Seite mit einer Innen- oder Außenlamelle (Reibpartner der zweiten Lamelle) der Reibungskupplung eine reibschlüssige Verbindung aus, wenn die Lamellen miteinander verpresst werden.

Ist die erste Lamelle mit dem Innenkorb dauerhaft formschlüssig verbunden, kann sie als Ersatz für eine Innenlamelle einer bekannten Lamellenkupplung eingesetzt werden. Ist die erste Lamelle mit dem Außenkorb dauerhaft formschlüssig verbunden, kann sie als Ersatz für eine Außenlamelle einer bekannten Lamellenkupplung eingesetzt werden.

Insbesondere ist bei Vorliegen einer geschalteten reibschlüssigen Verbindung zumindest zwischen der mindestens einen Innenlamelle und der mindestens einen Außenlamelle und bei Vorliegen der Drehmomentdifferenz die zweite Lamelle über eine reibschlüssige Verbindung mit einem Reibpartner (mit einer benachbart angeordneten Außen- oder Innenlamelle) verbunden. Insbesondere ist die zweite Lamelle zusammen mit dem Reibpartner dann in der Umfangsrichtung aus einer Ausgangsstellung der Formschlusseinheit gegenüber der ersten Lamelle verdrehbar, wobei infolge dieser Verdrehung das mindestens eine Mitnehmerelement in der radialen Richtung verlagerbar ist.

Die Verdrehung der zweiten Lamelle gegenüber der ersten Lamelle umfasst insbesondere einen Winkelbetrag von mindestens einem (1) Winkelgrad und ggf. höchstens einen Winkelbetrag von 20 Winkelgrad, bevorzugt von 10 Winkelgrad.

Insbesondere ist ein über die reibschlüssige Verbindung zwischen zweiter Lamelle und dem Reibpartner übertragbares Drehmoment größer als ein zwischen der ersten Lamelle und zweiter Lamelle in einer bestimmten Drehrichtung übertragbares Drehmoment, bei dem es noch zu keiner Verdrehung der zweiten Lamelle gegenüber der ersten Lamelle kommt.

Z. B. ist also nur die erste Lamelle (unmittelbar) mit dem Innenkorb dauerhaft formschlüssig verbunden. Die zweite Lamelle ist mit keinem von Innenkorb oder Außenkorb (unmittelbar) formschlüssig verbunden. Bei Überschreiten der Drehmomentdifferenz, also wenn z. B. über den Außenkorb und eine Außenlamelle ein so hohes Drehmoment auf die zweite Lamelle eingeleitet wird, dass eine in der Umfangsrichtung wirkende Reibkraft und/oder z. B. einer Federkraft (z. B. einer Druckfeder, siehe dazu mehr im Folgenden) zwischen der ersten Lamelle und der zweiten Lamelle überwunden wird, kann die zweite Lamelle gegenüber der ersten Lamelle verdreht werden. Dabei ist die erste Lamelle mit dem Innenkorb weiter formschlüssig verbunden. Die zweite Lamelle ist mit keinem von Innenkorb und Außenkorb formschlüssig verbunden, so dass eine Verdrehung zunächst möglich ist.

Infolge der Verdrehung kann das mindestens eine Mitnehmerelement in der radialen Richtung verlagert werden, so dass über die Formschlusseinheit eine formschlüssige Verbindung zwischen Innenkorb und Außenkorb realisiert ist. Eine weitere Verdrehung der zweiten Lamelle gegenüber der ersten Lamelle kann z. B. über Führungselemente der Mitnehmerelemente oder Anschläge begrenzt werden.

Bevorzugt ist das mindestens eine Mitnehmerelement zumindest in einem von erster Lamelle und zweiter Lamelle geführt, insbesondere in beiden Lamellen. Insbesondere sind in der ersten Lamelle und/oder in der zweiten Lamelle Führungen, z. B. Kulissen, vorgesehen, durch die das Mitnehmerelement geführt ist. Insbesondere weist das mindestens eine Mitnehmerelement Führungselemente auf, die sich entlang der Drehachse in bzw. durch die Führungen erstrecken.

Insbesondere ist das mindestens eine Mitnehmerelement so geführt, dass in der Ausgangsstellung der Formschlusseinheit eine Verlagerung des Mitnehmerelements durch eine Fliehkraft verhindert ist. Insbesondere kann so verhindert werden, dass ein Formschluss infolge einer Drehzahl der Reibungskupplung erzeugt wird.

Die Formschlusseinheit umfasst zusätzlich mindestens ein Zwischenelement, das einen (konstanten) Abstand zwischen der ersten Lamelle und der zweiten Lamelle entlang der Drehachse gewährleistet, so dass das mindestens eine Mitnehmerelement gegenüber der ersten Lamelle und der zweiten Lamelle verlagerbar ist. Insbesondere soll dieser Abstand auch bei Verpressen der Lamellen miteinander gewährleistet werden. Damit kann ein Einklemmen des Mitnehmerelements zwischen der ersten und zweiten Lamelle verhindert werden, so dass eine Verlagerung des Mitnehmerelements - auch bei Beaufschlagen der Lamellen mit einer Presskraft zur Ausbildung der reibschlüssigen Verbindung - in der radialen Richtung nicht behindert wird.

Insbesondere wird das mindestens eine Mitnehmerelement durch eine Rückdrehung von zweiter Lamelle gegenüber der ersten Lamelle in der radialen Richtung zurückverlagert, so dass die formschlüssige Verbindung von Innenkorb und Außenkorb wieder aufgehoben werden kann. Diese Rückdrehung der zweiten Lamelle gegenüber der ersten Lamelle kann insbesondere durch eine Unterschreitung der Drehmomentdifferenz oder durch eine Umkehrung der Drehmomentdifferenz (ggf. auch mit einem anderen Betrag) und/oder durch eine Reduzierung oder Aufhebung der reibschlüssigen Verbindung zwischen den Innenlamellen und Außenlamellen erfolgen.

Insbesondere ist zwischen der ersten Lamelle und der zweiten Lamelle mindestens ein Energiespeicherelement vorgesehen. Infolge der Verdrehung der zweiten Lamelle gegenüber der ersten Lamelle kann dieses mindestens eine Energiespeicherelement aufgeladen werden, so dass eine Rückdrehung der zweiten Lamelle durch die gespeicherte Energie des Energiespeicherelements eingeleitet werden kann.

Das Energiespeicherelement ist insbesondere eine Feder, die eine in der Umfangsrichtung wirkende Federkraft aufweist. Die Feder ist insbesondere vorgespannt zwischen der ersten Lamelle und der zweiten Lamelle angeordnet. Im Zusammenspiel mit dem mindestens einen Mitnehmerelement, dass insbesondere in Führungen der ersten Lamelle und/oder zweiten Lamelle geführt ist, kann die Formschlusseinheit so in der Ausgangsstellung gehalten bzw. in die Ausgangsstellung zurückgeführt werden.

Das mindestens eine Zwischenelement weist mindestens eine in der Umfangsrichtung wirkende Druckfeder auf, durch die die erste Lamelle und die zweite Lamelle in einer Ausgangsstellung angeordnet sind. Infolge der Verdrehung der zweiten Lamelle gegenüber der ersten Lamelle kann die mindestens eine Druckfeder gespannt bzw. durch eine Rückdrehung der zweiten Lamelle entspannt werden.

Insbesondere weist die Formschlusseinheit eine Mehrzahl von Mitnehmerelementen und/oder Energiespeicherelementen und/oder Zwischenelementen auf. Diese sind insbesondere entlang der Umfangsrichtung gleichmäßig voneinander beabstandet angeordnet.

Insbesondere kann durch die Formschlusseinheit ein Formschluss zwischen einer Eingangsseite und einer Ausgangsseite der Reibkupplung hergestellt werden, der ausschließlich durch eine Verdrehung der zweiten Lamelle gegenüber der ersten Lamelle in einer bestimmten Umfangsrichtung herstellbar ist. Zum Auslösen dieser Verdrehung muss ein bestimmtes Drehmoment bzw. eine bestimmte Drehmomentdifferenz zwischen Eingangsseite und Ausgangsseite vorliegen.

Die Formschlusseinheit ermöglicht damit die Funktion nach Art eines Freilaufs, der in einer Drehrichtung einen Formschluss und in der anderen Drehrichtung gerade keinen Formschluss herstellt. Im Unterschied zu einem Freilauf weist die vorgeschlagene Formschlusseinheit größere Schaltwege auf, d. h. auch bei einer Variation der anliegenden Drehmomentdifferenz kann der Formschluss erhalten bleiben. Weiterhin können die bei einem Freilauf vorliegenden hohen Flächenpressungen verringert werden.

Weiter ermöglicht die Formschlusseinheit insbesondere, dass z. B. in einem Schubbetrieb im Antriebsstrang, das dann vorliegende Drehmoment (regelmäßig geringer als im Zugbetrieb) über weniger Lamellen übertragen werden kann. Im Zugbetrieb kann dann die Übertragung eines höheren Drehmoments durch den Formschluss sicher übertragen werden. Eine bekannte Verstärkung einer Anpresskraft der Lamellen z. B. über Blattfedern kann dann schubseitig genutzt werden.

Damit können sonst benötigte Lamellen eingespart werden, so dass weniger Reibverluste im Betrieb der Reibungskupplung entstehen und ein geringerer Bauraumbedarf vorliegt.

Es wird weiter ein Hybridmodul für einen Antriebsstrang eines Kraftfahrzeugs vorgeschlagen. Das Hybridmodul umfasst zumindest die beschriebene Reibungskupplung sowie einen Elektroantrieb (eine elektrische Maschine) mit einem Rotor und einem Stator, wobei der Rotor drehmomentübertragend mit der Eingangsseite oder der Ausgangsseite der Reibungskupplung verbunden ist. Der Elektroantrieb ist koaxial zur Reibungskupplung oder achsparallel zur Reibungskupplung angeordnet. Bei einer achsparallelen Anordnung kann der Elektroantrieb z. B. mittels eines Zugmitteltriebs, beispielsweise ein (Keil-) Riementrieb, mit der Drehachse der Reibungskupplung (z. B. mit einer Getriebewelle und/oder einer Antriebswelle) verbunden sein.

Die Ausführungen zu der Reibungskupplung gelten insbesondere gleichermaßen für das Hybridmodul und umgekehrt.

Vorsorglich sei angemerkt, dass die hier verwendeten Zahlwörter ("erste", "zweite", ...) vorrangig (nur) zur Unterscheidung von mehreren gleichartigen Gegenständen, Grö-ßen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figu-ren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine Reibungskupplung in einer Seitenansicht im Schnitt;
- Fig. 2:: eine Formschlusseinheit in einer Ausgangsstellung in einer perspektivischen Darstellung;
- Fig. 3:: die Formschlusseinheit nach Fig. 2 in einer Ausgangsstellung in einer Seitenansicht;
- Fig. 4:: die Formschlusseinheit nach Fig. 3 in einer ersten perspektivischen Darstellung;
- Fig. 5:: die Formschlusseinheit nach Fig. 3 und 4 in einer zweiten perspektivischen Darstellung;
- Fig. 6:: die Formschlusseinheit nach Fig. 2 in einer ersten Zwischenstellung in einer Seitenansicht;
- Fig. 7:: die Formschlusseinheit nach Fig. 6 in einer ersten perspektivischen Darstellung;
- Fig. 8:: die Formschlusseinheit nach Fig. 6 und 7 in einer zweiten perspektivischen Darstellung;
- Fig. 9:: die Formschlusseinheit nach Fig. 2 in einer zweiten Zwischenstellung in einer Seitenansicht;
- Fig. 10:: die Formschlusseinheit nach Fig. 9 in einer ersten perspektivischen Darstellung;
- Fig. 11:: die Formschlusseinheit nach Fig. 9 und 10 in einer zweiten perspektivischen Darstellung;
- Fig. 12:: die Formschlusseinheit nach Fig. 2 in einer Endstellung in einer Seitenansicht.;
- Fig. 13:: die Formschlusseinheit nach Fig. 12 in einer ersten perspektivischen Darstellung;
- Fig. 14:: die Formschlusseinheit nach Fig. 12 und 13 in einer zweiten perspektivischen Darstellung;
- Fig. 15:: einen Teil der Reibungskupplung nach Fig. 1 in einer Ansicht entlang der Drehachse;
- Fig. 16:: eine erste Ausführungsvariante eines Kraftfahrzeugs; und
- Fig. 17:: eine zweite Ausführungsvariante eines Kraftfahrzeugs.

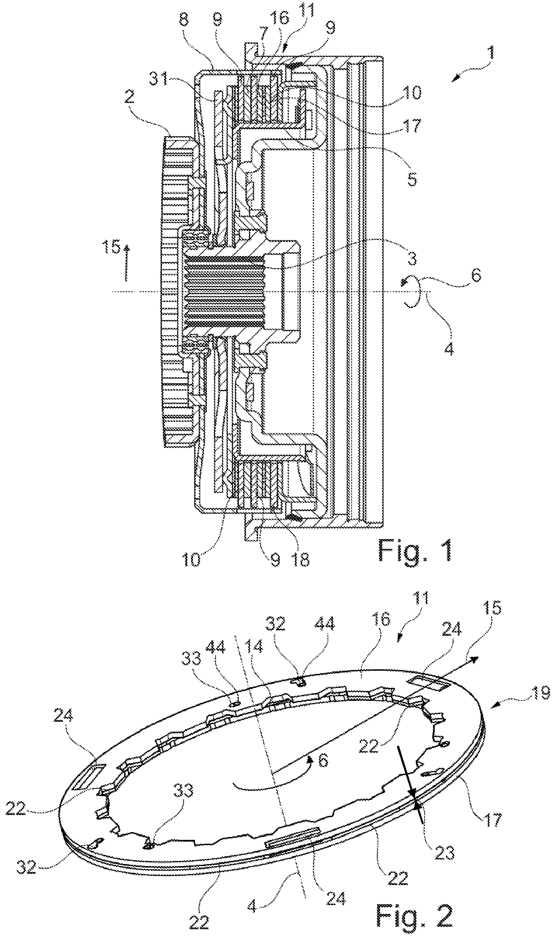

Fig. 1 zeigt eine Reibungskupplung in einer Seitenansicht im Schnitt. Mit der Reibungskupplung können Drehmomenten zwischen einer Eingangsseite 2 und einer Ausgangsseite 3 schaltbar übertragen werden. Die Reibungskupplung 1 umfasst eine Drehachse 4, eine mit einem Innenkorb 5 gegenüber einer Umfangsrichtung 6 formschlüssig verbundene Innenlamelle 7 und drei mit einem Außenkorb 8 gegenüber der Umfangsrichtung 6 formschlüssig verbundene Außenlamellen 9. Zwischen der Innenlamelle 7 und den Außenlamellen 9 ist eine gegenüber der Umfangsrichtung 6 reibschlüssige Verbindung 10 schaltbar herstellbar. Zusätzlich ist eine Formschlusseinheit 11 vorgesehen, die unmittelbar mit dem Innenkorb 5 gegenüber der Umfangsrichtung 6 dauerhaft formschlüssig verbunden ist und in Abhängigkeit von einer Drehmomentdifferenz zwischen Eingangsseite 2 und Ausgangsseite 3 mehrere gegenüber der Umfangsrichtung 6 formschlüssige Verbindungen 12 mit dem Außenkorb 8 ausbildet.

Die Anpresskraft zum Verpressen der Lamellen 7, 9 wird über ein Hebelelement 31 bereitgestellt. Die Lamellen 7, 9 sind dazu in den Körben 5, 8 entlang der Drehachse 4 verschiebbar eingehängt. Zum Übertragen eines Drehmoments werden die Lamellen 7, 9 des Lamellenpakets entlang der Drehachse 4 miteinander verpresst. Soll kein Drehmoment übertragen werden, werden die Lamellen 7, 9 des Lamellenpakets axial voneinander beabstandet, beispielsweise indem ein Zentralausrücker das Hebelelement 31 auslenkt und somit die Einleitung der Anpresskraft von dem Hebelelement 31 auf das Lamellenpaket unterbindet.

Hier ist die Einlassseite 2 mit dem Außenkorb 8 und die Ausgangsseite mit dem Innenkorb 5 verbunden.

Die Formschlusseinheit 11 weist eine erste Lamelle 16 und eine zweite Lamelle 17 auf. Die Lamellen 16, 17 sind (ähnlich wie die Innenlamellen 7 und Außenlamellen 9) ringförmig und in der Umfangsrichtung 6 geschlossen ausgeführt. Die Lamellen 16, 17 der Formschlusseinheit 11 können z. B. in einer bekannten Lamellenkupplung anstatt einer oder mehrerer Außen- oder Innenlamellen 7, 9 eingesetzt werden. Hier ist nur die erste Lamelle 16 unmittelbar mit dem Innenkorb 5 dauerhaft formschlüssig verbunden. Die zweite Lamelle 17 ist mit keinem von Innenkorb 5 oder Außenkorb 8 unmittelbar formschlüssig verbunden.

Die zweite Lamelle 17 bildet auf einer von der ersten Lamelle 16 wegweisenden Seite mit einer Außenlamelle 9 (Reibpartner der zweiten Lamelle 17) der Reibungskupplung 1 eine reibschlüssige Verbindung 10 aus, wenn die Lamellen 7, 9, 16, 17 miteinander verpresst werden.

Fig. 2 zeigt eine Formschlusseinheit 11 in einer Ausgangsstellung 19 in einer perspektivischen Darstellung.

Die Formschlusseinheit 11 weist eine erste Lamelle 16 und eine zweite Lamelle 17 sowie zwischen diesen Lamellen 16, 17 mehrere, hier drei, Mitnehmerelemente 14 auf. Die Lamellen 16, 17 sind ringförmig und in der Umfangsrichtung 6 geschlossen ausgeführt. Hier ist nur die erste Lamelle 16 unmittelbar mit dem Innenkorb 5 dauerhaft formschlüssig verbunden (über die Keilverzahnung an der inneren Umfangsfläche der ersten Lamelle 16). Die zweite Lamelle 17 ist mit keinem von Innenkorb 5 oder Außenkorb 8 unmittelbar formschlüssig verbunden und weist entsprechend keine Keilverzahnung zur Ausbildung einer formschlüssigen Verbindung mit Außenkorb 8 oder Innenkorb 5 auf.

Die formschlüssigen Verbindungen 12 zwischen Formschlusseinheit 11 und Außenkorb 8 sind durch die Verlagerung 13 der Mitnehmerelemente 14 der Formschlusseinheit 11 entlang einer radialen Richtung 15 herstellbar.

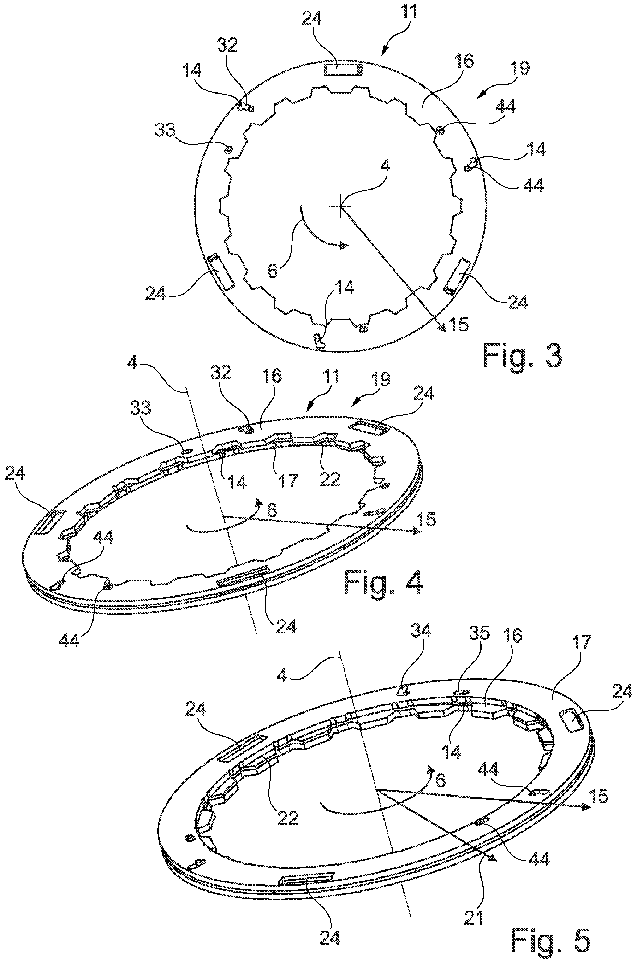

Die Mitnehmerelemente 14 sind in der ersten Lamelle 16 und in der zweiten Lamelle 17 geführt. Dafür sind in der ersten Lamelle 16 und in der zweiten Lamelle 17 Führungen 32, 33, 34, 35, hier als Kulissen ausgeführt, vorgesehen, durch die jedes Mitnehmerelement 14 geführt ist. Dafür weist jedes Mitnehmerelement 14 Führungselemente 44 auf, die sich entlang der Drehachse 4 in bzw. durch die Führungen 32, 33, 34, 35 erstrecken. Dabei ist jedes Mitnehmerelement 14 so geführt, dass in der Ausgangsstellung 19 der Formschlusseinheit 11 eine Verlagerung 13 des Mitnehmerelements 14 durch eine Fliehkraft 21 (siehe Fig. 5) verhindert ist. Damit kann verhindert werden, dass ein Formschluss infolge einer Drehzahl der Reibungskupplung 1 erzeugt wird.

Zur Verhinderung der Verlagerung 13 durch Fliehkraft 21 weist die dritte Führung 34 (in der zweiten Lamelle 17, siehe Fig. 5) einen sich in der Umfangsrichtung 6 erstreckenden Abschnitt auf. Das Führungselement 44 des Mitnehmerelements 14 befindet sich in der Ausgangsstellung 19 der Formschlusseinheit 11, wenn also noch keine Verdrehung 20 der zweiten Lamelle 17 gegenüber der ersten Lamelle 16 vorliegt, in diesem Abschnitt, so dass eine Verlagerung 13 entlang der radialen Richtung 15 verhindert wird.

Erst nach einer Verdrehung 20 der zweiten Lamelle 17 gegenüber der ersten Lamelle 16 bewegt sich das Führungselement 44 des Mitnehmerelements 14 entlang der dritten Führung 34 in der radialen Richtung 15 (ermöglicht durch die sich in Umfangsrichtung 6 erstreckenden Kulissen der vierten Führung 35 und der zweiten Führung 32), siehe Fig. 3 bis 14.

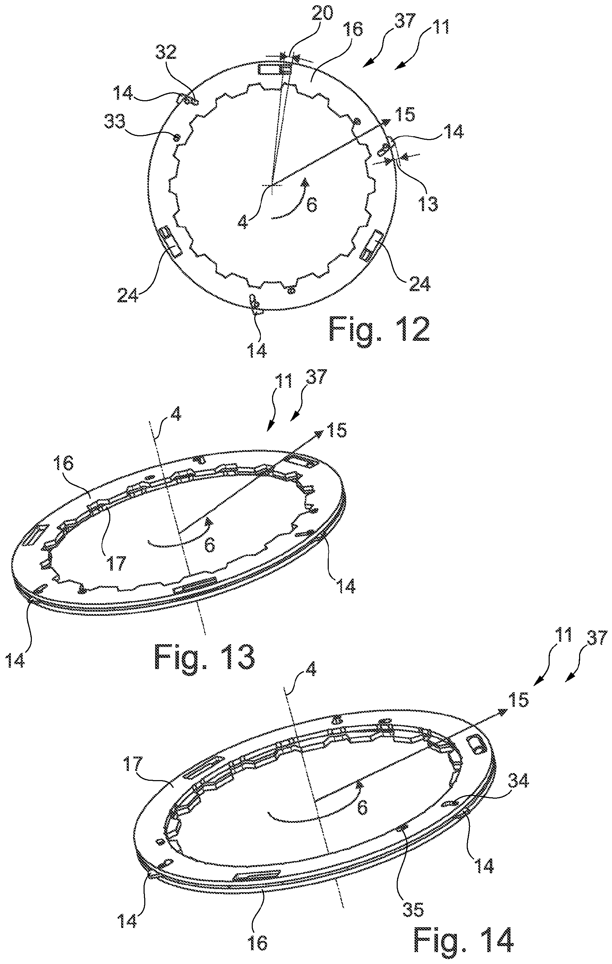

Gleichermaßen kann eine Rück-Verlagerung 13 des Mitnehmerelements 14 verhindert werden. Dafür weist die erste Führung 32 (in der ersten Lamelle 16, siehe Fig. 2) einen sich in der Umfangsrichtung 6 erstreckenden Abschnitt auf. Das Führungselement 44 des Mitnehmerelements 14 befindet sich in der Endstellung 37 der Formschlusseinheit 11, wenn also eine maximale Verdrehung 20 der zweiten Lamelle 17 gegenüber der ersten Lamelle 16 vorliegt, in diesem Abschnitt, so dass eine Rück-Verlagerung 13 entlang der radialen Richtung 15 verhindert wird (siehe Fig. 12).

Erst nach einer Rück-Verdrehung 20 der zweiten Lamelle 17 gegenüber der ersten Lamelle 16 bewegt sich das Führungselement 44 des Mitnehmerelements 14 entlang der ersten Führung 34 in der radialen Richtung 15 (ermöglicht durch die sich in Umfangsrichtung 6 erstreckenden Kulissen der vierten Führung 35 und der zweiten Führung 32), siehe Fig. 3 bis 14.

Die Formschlusseinheit 11 weist zusätzlich Zwischenelemente 22 auf, die einen konstanten Abstand 23 zwischen der ersten Lamelle 16 und der zweiten Lamelle 17 entlang der Drehachse 4 gewährleisten, so dass die Mitnehmerelemente 14 gegenüber der ersten Lamelle 16 und der zweiten Lamelle 17 auch bei Vorliegen einer die Lamellen 7, 9, 16, 17 beaufschlagenden Anpresskraft verlagerbar sind.

Weiter sind zwischen der ersten Lamelle 16 und der zweiten Lamelle 17 Energiespeicherelemente (Druckfedern 24) vorgesehen. Infolge der Verdrehung 20 der zweiten Lamelle 17 gegenüber der ersten Lamelle 16 können diese Energiespeicherelemente aufgeladen werden, so dass eine Rückdrehung der zweiten Lamelle 17 durch die gespeicherte Energie des Energiespeicherelements eingeleitet werden kann.

Durch die in der Umfangsrichtung 6 wirkenden Druckfedern 24 werden die erste Lamelle 16 und die zweite Lamelle 17 in der hier dargestellten Ausgangsstellung 19 zueinander angeordnet. Infolge der Verdrehung 20 der zweiten Lamelle 17 gegenüber der ersten Lamelle 16 können die Druckfedern 24 weiter gespannt bzw. durch eine Rückdrehung der zweiten Lamelle 17 zumindest teilweise wieder entspannt werden.

Fig. 3 zeigt die Formschlusseinheit 11 nach Fig. 2 in einer Ausgangsstellung 19 in einer Seitenansicht. Fig. 4 zeigt die Formschlusseinheit 11 nach Fig. 3 in einer ersten perspektivischen Darstellung. Fig. 5 zeigt die Formschlusseinheit 11 nach Fig. 3 und 4 in einer zweiten perspektivischen Darstellung. Die Fig. 3 bis 5 werden im Folgenden gemeinsam beschrieben. Auf die Ausführungen zu Fig. 2 wird verwiesen.

In der dargestellten Ausgangsstellung 19 sind die Lamellen 16, 17 nicht zueinander verdreht angeordnet.

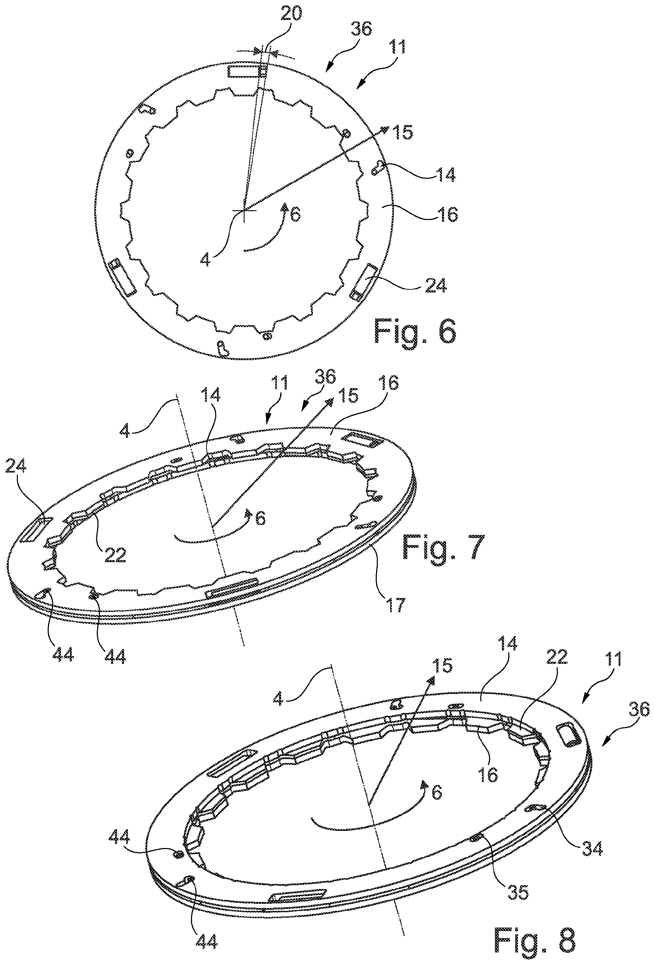

Fig. 6 zeigt die Formschlusseinheit 11 nach Fig. 2 in einer ersten Zwischenstellung 36 in einer Seitenansicht. Fig. 7 zeigt die Formschlusseinheit 11 nach Fig. 6 in einer ersten perspektivischen Darstellung. Fig. 8 zeigt die Formschlusseinheit 11 nach Fig. 6 und 7 in einer zweiten perspektivischen Darstellung. Die Fig. 6 bis 8 werden im Folgenden gemeinsam beschrieben. Auf die Ausführungen zu Fig. 2 und 3 bis 5 wird verwiesen.

In der dargestellten ersten Zwischenstellung 36 ist die zweite Lamelle 17 um eine Verdrehung 20 entlang der Umfangsrichtung 6 gegenüber der ersten Lamelle 16 verdreht angeordnet. In Fig. 8 ist erkennbar, dass infolge der Verdrehung 20 die Führungselemente 44 jedes Mitnehmerelements 14 entlang der Umfangsrichtung 6 gegenüber der zweiten Lamelle 17 und der dritten Führung 34 sowie der vierten Führung 35 verschoben sind, so dass eine Verlagerung 13 der Führungselemente 44 entlang der dritten Führung 34 nun möglich wäre.

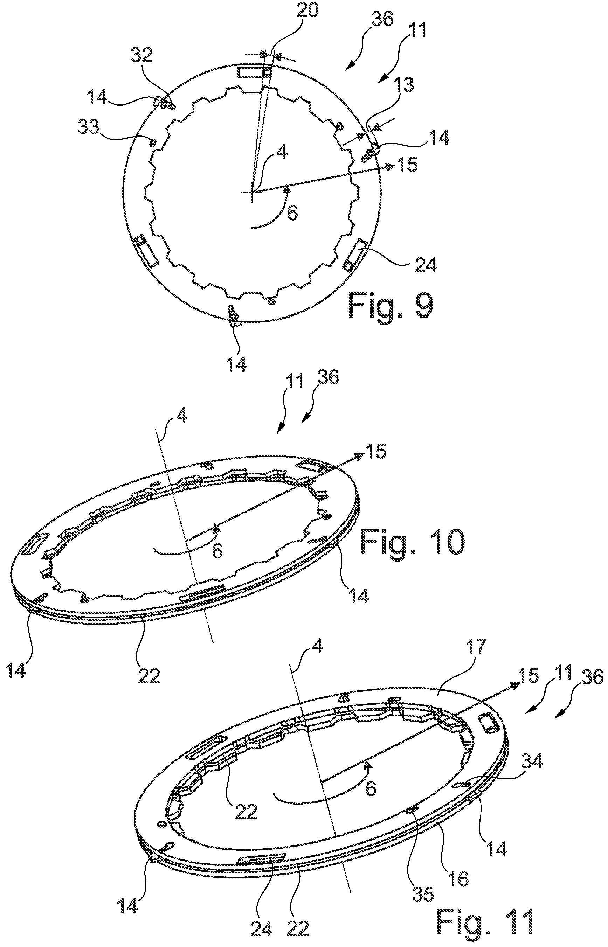

Fig. 9 zeigt die Formschlusseinheit 11 nach Fig. 2 in einer zweiten Zwischenstellung 36 in einer Seitenansicht. Fig. 10 zeigt die Formschlusseinheit 11 nach Fig. 9 in einer ersten perspektivischen Darstellung. Fig. 11 zeigt die Formschlusseinheit 11 nach Fig. 9 und 10 in einer zweiten perspektivischen Darstellung. Die Fig. 9 bis 11 werden im Folgenden gemeinsam beschrieben. Auf die Ausführungen zu Fig. 2 und 3 bis 5 sowie 6 bis 8 wird verwiesen.

In der dargestellten zweiten Zwischenstellung 36 ist die zweite Lamelle 17 um eine größere Verdrehung 20 entlang der Umfangsrichtung 6 gegenüber der ersten Lamelle 16 verdreht angeordnet. In Fig. 9 bis 11 ist erkennbar, dass infolge der Verdrehung 20 die Führungselemente 44 jedes Mitnehmerelements 14 entlang der Umfangsrichtung 6 gegenüber der zweiten Lamelle 17 und der dritten Führung 34 sowie der vierten Führung 35 verschoben sind, so dass eine Verlagerung 13 der Führungselemente 44 entlang der dritten Führung 34 und damit auch der ersten Führung 32 möglich war. Hier sind die Führungselemente 44 der Mitnehmerelemente 14 entlang der ersten Führung 32 und dritten Führung 34 in der radialen Richtung 15 nach außen verlagert, so dass die Mitnehmerelemente 14 die zur Bildung einer formschlüssigen Verbindung 12 mit dem Außenkorb 8 erforderliche Verlagerung 13 aufweisen.

Eine Endstellung 37 ist jedoch noch nicht erreicht, so dass die Führungselemente 44 der Mitnehmerelemente 14 in den ersten Führungen 32 noch nicht in den entlang der Umfangsrichtung 6 erstreckenden Abschnitt hineinbewegt wurden.

Fig. 12 zeigt die Formschlusseinheit 11 nach Fig. 2 in einer Endstellung 37 in einer Seitenansicht. Fig. 13 zeigt die Formschlusseinheit 11 nach Fig. 12 in einer ersten perspektivischen Darstellung. Fig. 14 zeigt die Formschlusseinheit 11 nach Fig. 12 und 13 in einer zweiten perspektivischen Darstellung. Die Fig. 12 bis 14 werden im Folgenden gemeinsam beschrieben. Auf die Ausführungen zu Fig. 2 und 3 bis 5, 6 bis 8 sowie 9 bis 11 wird verwiesen.

In der dargestellten Endstellung 37 ist die zweite Lamelle 17 um eine maximale Verdrehung 20 entlang der Umfangsrichtung 6 gegenüber der ersten Lamelle 16 verdreht angeordnet. Eine weitere Verdrehung 20 wird z. B. durch die Mitnehmerelemente 44 bzw. durch die Druckfedern 44 bzw. durch Anschläge verhindert. Hier sind die Führungselemente 44 der Mitnehmerelemente 14 entlang der ersten Führung 32 und dritten Führung 34 in der radialen Richtung 15 nach außen verlagert, so dass die Mitnehmerelemente 14 die zur Bildung einer formschlüssigen Verbindung 12 mit dem Außenkorb 8 erforderliche Verlagerung 13 aufweisen. In Fig. 12 und 13 ist erkennbar, dass die Führungselemente 44 der Mitnehmerelemente 14 in den ersten Führungen 32 in den entlang der Umfangsrichtung 6 erstreckenden Abschnitt hineinbewegt wurden. Eine Rück-Verlagerung 13 der Mitnehmerelemente 14 ist damit (ohne Rückverdrehung 20) nicht möglich.

Im Folgenden wird auf die Fig. 2 bis 14 Bezug genommen. Die Verdrehung 20 der zweiten Lamelle 17 gegenüber der ersten Lamelle 16 wird ausgehend von der Ausgangsstellung 19 (siehe Fig. 2 bis 5) zunehmend größer (über die erste Zwischenstellung 36 in Fig. 6 bis 8, die zweite Zwischenstellung 36 in Fig. 9 bis 11, bis hin zur Endstellung 37 in Fig. 12 bis 14).

Bei Vorliegen einer geschalteten reibschlüssigen Verbindung 10 zwischen der Innenlamelle 7 und den Außenlamellen 9 und bei Vorliegen der Drehmomentdifferenz ist die zweite Lamelle 17 über eine reibschlüssige Verbindung 10 mit einem Reibpartner (mit einer benachbart angeordneten Außenlamelle 9) verbunden. Dabei ist die zweite Lamelle 17 zusammen mit dem Reibpartner in der Umfangsrichtung 6 aus der Ausgangsstellung 19 der Formschlusseinheit 11 gegenüber der ersten Lamelle 16 verdrehbar, wobei infolge dieser Verdrehung 20 die Mitnehmerelemente 14 in der radialen Richtung 14 um eine Verlagerung 13 verlagerbar sind.

Vorliegend ist die zweite Lamelle 17 mit keinem von Innenkorb 5 oder Außenkorb 8 unmittelbar formschlüssig verbunden. Bei Überschreiten der Drehmomentdifferenz, also wenn z. B. über den Außenkorb 8 und die Außenlamellen 9 ein so hohes Drehmoment auf die zweite Lamelle 17 eingeleitet wird, dass eine in der Umfangsrichtung 6 wirkende Reibkraft der reibschlüssigen Verbindung 10 und/oder Federkraft der Druckfedern 24 zwischen der ersten Lamelle 16 und der zweiten Lamelle 17 überwunden wird, kann die zweite Lamelle 17 gegenüber der ersten Lamelle 16 verdreht werden. Dabei ist die erste Lamelle 16 mit dem Innenkorb 5 weiter formschlüssig verbunden.

Infolge der Verdrehung 20 können die Mitnehmerelemente 14 in der radialen Richtung 15 verlagert werden, so dass über die Formschlusseinheit 11 formschlüssige Verbindungen 12 zwischen Innenkorb 5 und Außenkorb 5 realisiert werden.

Die Mitnehmerelemente 14 können durch eine Rück-Verdrehung 20 von zweiter Lamelle 17 gegenüber der ersten Lamelle 16 in der radialen Richtung 15 zurückverlagert werden, so dass die formschlüssige Verbindung 12 von Innenkorb 5 und Außenkorb 8 wieder aufgehoben werden kann. Diese Rück-Verdrehung 20 der zweiten Lamelle 17 gegenüber der ersten Lamelle 16 kann durch eine Unterschreitung der Drehmomentdifferenz oder durch eine Umkehrung der Drehmomentdifferenz (ggf. auch mit einem anderen Betrag) bzw. durch eine Reduzierung oder Aufhebung der reibschlüssigen Verbindungen 10 zwischen der Innenlamelle 7 und den Außenlamellen 9 (durch Reduzieren oder Aufheben der die Lamellen 7, 9 verpressenden Anpresskraft) erfolgen.

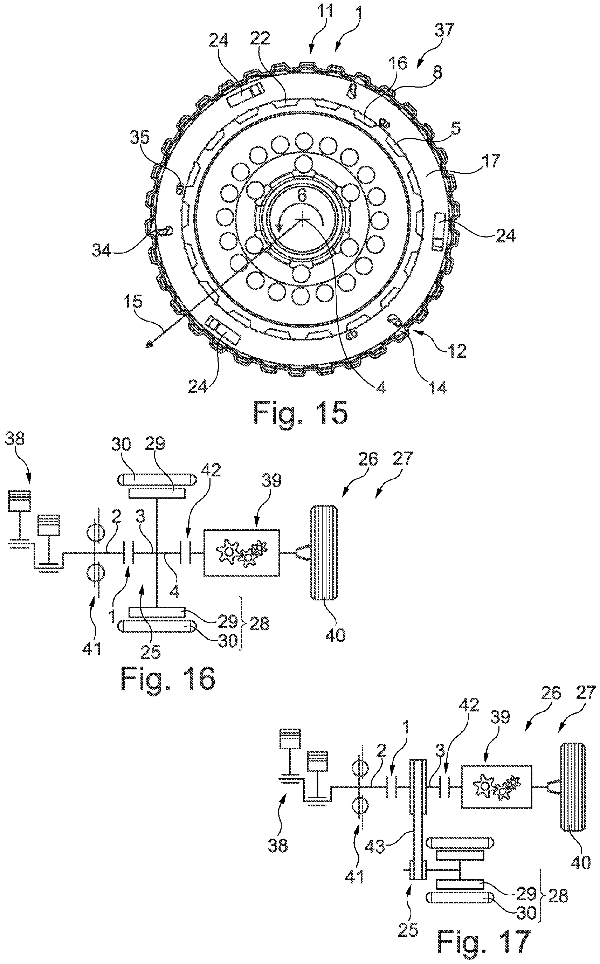

Fig. 15 zeigt einen Teil der Reibungskupplung 1 nach Fig. 1 in einer Ansicht entlang der Drehachse 4. Auf die Ausführungen zu Fig. 2 bis 14 wird Bezug genommen.

Hier ist der Außenkorb 8, die Formschlusseinheit 11 mit erster Lamelle 16 (hinten), zweiter Lamelle 17 (vorne), Zwischenelementen 22, Druckfedern 24, Mitnehmerelementen 14 und Innenkorb 5 dargestellt. Die Lamellen 16, 17 sind um eine maximale Verdrehung 20 zueinander verdreht, so dass die Mitnehmerelemente 14 um die Verlagerung 13 in der radialen Richtung 15 nach außen verlagert angeordnet sind. Damit wird die formschlüssige Verbindung 12 zwischen Außenkorb 8 und Innenkorb 5 realisiert.

Fig. 16 zeigt eine erste Ausführungsvariante eines Kraftfahrzeugs 27. Das Kraftfahrzeug 27 umfasst einen Antriebsstrang 27 zum Antrieb eines Rades 40. Der Antriebsstrang 26 umfasst einen Elektroantrieb 28 mit einem Rotor 29 und einem Stator 30. Der Antriebsstrang 26 umfasst weiter eine weitere Antriebseinheit 38 (Verbrennungskraftmaschine), die mit dem Elektroantrieb 28 über die Reibungskupplung 1 schaltbar verbindbar ist. Die Eingangsseite 2 der Reibungskupplung 1 ist über einen Dämpfer 41 mit der Antriebseinheit 38 verbunden. Die Ausgangsseite 3 der Reibungskupplung 1 ist mit dem Rotor 29 verbunden. Weiter ist die Ausgangsseite 3 über eine K1-Kupplung 42 mit einem Getriebe 39 verbunden.

Reibungskupplung 1 und der Elektroantrieb 28 bilden ein Hybridmodul 25, wobei der Rotor 29 drehmomentübertragend mit der Ausgangsseite 3 der Reibungskupplung 1 verbunden ist. Der Elektroantrieb 28 ist hier koaxial zur Reibungskupplung 1 zur Reibungskupplung 1 angeordnet.

Fig. 17 zeigt eine zweite Ausführungsvariante eines Kraftfahrzeugs 27. Auf die Ausführungen zu Fig. 16 wird verwiesen.

Im Unterschied zu Fig. 16 ist der Elektroantrieb 28 hier achsparallel zur Reibungskupplung 1 angeordnet. Bei der achsparallelen Anordnung ist der Rotor 29 des Elektroantriebs 28 mittels eines Riemens 43 mit der Drehachse 4 der Reibungskupplung 1 verbunden.

### Bezugszeichenliste

- 1: Reibungskupplung
- 2: Eingangsseite
- 3: Ausgangsseite
- 4: Drehachse
- 5: Innenkorb
- 6: Umfangsrichtung
- 7: Innenlamelle
- 8: Außenkorb
- 9: Außenlamelle
- 10: reibschlüssige Verbindung
- 11: Formschlusseinheit
- 12: formschlüssige Verbindung
- 13: Verlagerung
- 14: Mitnehmerelement
- 15: radiale Richtung
- 16: erste Lamelle
- 17: zweite Lamelle
- 18: Reibpartner
- 19: Ausgangsstellung
- 20: Verdrehung
- 21: Fliehkraft
- 22: Zwischenelement
- 23: Abstand
- 24: Druckfeder
- 25: Hybridmodul
- 26: Antriebsstrang
- 27: Kraftfahrzeug
- 28: Elektroantrieb
- 29: Rotor
- 30: Stator
- 31: Hebelelement
- 32: erste Führung
- 33: zweite Führung
- 34: dritte Führung
- 35: vierte Führung
- 36: Zwischenstellung
- 37: Endstellung
- 38: Antriebseinheit
- 39: Getriebe
- 40: Rad
- 41: Dämpfer
- 42: K1-Kupplung
- 43: Riemen
- 44: Führungselement

## Patentansprüche

1. Reibungskupplung (1) zur Übertragung von Drehmomenten zwischen einer Eingangsseite (2) und einer Ausgangsseite (3), zumindest umfassend eine Drehachse (4), mindestens eine mit einem Innenkorb (5) gegenüber einer Umfangsrichtung (6) formschlüssig verbundene Innenlamelle (7) und mindestens eine mit einem Außenkorb (8) gegenüber der Umfangsrichtung (6) formschlüssig verbundene Außenlamelle (9), wobei die Innenlamelle (7) und die Außenlamelle (9) entlang der Drehachse (4) hintereinander angeordnet sind, wobei zumindest zwischen den Lamellen (7, 9) gegenüber der Umfangsrichtung (6) eine reibschlüssige Verbindung (10) schaltbar herstellbar ist, wobei zusätzlich eine Formschlusseinheit (11) vorgesehen ist, die mit dem einen von Innenkorb (5) und Außenkorb (8) gegenüber der Umfangsrichtung (6) dauerhaft formschlüssig verbunden ist und in Abhängigkeit von einer Drehmomentdifferenz zwischen Eingangsseite (2) und Ausgangsseite (3) mindestens eine gegenüber der Umfangsrichtung (6) formschlüssige Verbindung (12) mit dem anderen von Außenkorb (8) und Innenkorb (5) ausbildet, wobei die mindestens eine formschlüssige Verbindung (12) durch eine Verlagerung (13) eines Mitnehmerelements (14) der Formschlusseinheit (11) zumindest entlang einer radialen Richtung (15) herstellbar ist, wobei die Formschlusseinheit (11) zumindest eine erste Lamelle (16) und eine zweite Lamelle (17) sowie zwischen diesen Lamellen (16, 17) das mindestens eine Mitnehmerelement (14) aufweist, **dadurch gekennzeichnet, dass** die Formschlusseinheit (11) zusätzlich mindestens ein Zwischenelement (22) umfasst, das mindestens eine in der Umfangsrichtung (6) wirkende Druckfeder (24) aufweist, durch die die erste Lamelle (16) und die zweite Lamelle (17) in einer Ausgangsstellung (19) angeordnet sind, und das einen Abstand (23) zwischen der ersten Lamelle (16) und der zweiten Lamelle (17) entlang der Drehachse (4) gewährleistet, so dass das mindestens eine Mitnehmerelement (14) gegenüber der ersten Lamelle (16) und der zweiten Lamelle (17) verlagerbar ist.

2. Reibungskupplung (1) nach Anspruch 1, wobei nur die erste Lamelle (16) mit dem Innenkorb (5) oder dem Außenkorb (8) dauerhaft formschlüssig verbunden ist.

3. Reibungskupplung (1) nach Anspruch 2, wobei bei Vorliegen einer geschalteten reibschlüssigen Verbindung (10) zumindest zwischen Innenlamelle (7) und Außenlamelle (9) und bei Vorliegen der Drehmomentdifferenz die zweite Lamelle (17) über eine reibschlüssige Verbindung (10) mit einem Reibpartner (18) zusammen mit dem Reibpartner (18) in der Umfangsrichtung (6) aus einer Ausgangsstellung (19) der Formschlusseinheit (11) gegenüber der ersten Lamelle (16) verdrehbar ist, wobei infolge dieser Verdrehung (20) das mindestens eine Mitnehmerelement (14) in der radialen Richtung (15) verlagerbar ist.

4. Reibungskupplung (1) nach Anspruch 3, wobei das mindestens eine Mitnehmerelement (14) zumindest in einem von erster Lamelle (16) und zweiter Lamelle (17) geführt ist.

5. Reibungskupplung (1) nach Anspruch 4, wobei das mindestens eine Mitnehmerelement (14) so geführt ist, dass in der Ausgangsstellung (19) eine Verlagerung (13) des Mitnehmerelements (14) in der radialen Richtung (15) durch eine Fliehkraft (21) verhindert ist.

6. Hybridmodul (25) für einen Antriebsstrang (26) eines Kraftfahrzeugs (27), zumindest umfassend eine Reibungskupplung (1) nach einem der vorhergehenden Ansprüche sowie einen Elektroantrieb (28) mit einem Rotor (29) und einem Stator (30), wobei der Rotor (29) drehmomentübertragend mit der Eingangsseite (2) oder der Ausgangsseite (3) der Reibungskupplung (1) verbunden ist; wobei der Elektroantrieb (28) koaxial zur Reibungskupplung (1) oder achsparallel zur Reibungskupplung (1) angeordnet ist.

## Claims

1. A friction clutch (1) for transmitting torques between an input side (2) and an output side (3), at least comprising a rotational axis (4), at least one inner plate (7) interlockingly connected to an inner cage (5) in relation to a circumferential direction (6), and at least one outer plate (9) interlockingly connected to an outer cage (8) in relation to the circumferential direction (6), wherein the inner plate (7) and the outer plate (9) are arranged in succession along the rotational axis (4), wherein it is possible to produce in a switchable manner a friction connection (10) at least between the plates (7, 9) in relation to the circumferential direction (6), an interlocking unit (11) being additionally provided which is permanently interlockingly connected to one of the inner cage (5) or outer cage (8) in relation to the circumferential direction (6) and forms, as a function of a torque difference between the input side (2) and the output side (3), at least one interlocking connection (12) in relation to the circumferential direction (6) with the other of the outer cage (8) or the inner cage (5), wherein the at least one interlocking connection (12) can be produced by a displacement (13) of a driver element (14) of the interlocking unit (11) at least along a radial direction (15), wherein the interlocking unit (11) has at least one first plate (16) and a second plate (17) as well as the at least one driver element (14) between these plates (16, 17), **characterised in that** the interlocking unit (11) additionally comprises at least one intermediate element (22), which has at least one compression spring (24) acting in the circumferential direction (6), by means of which the first plate (16) and the second plate (17) are arranged in an initial position (19), and which ensures a distance (23) between the first plate (16) and the second plate (17) along the rotational axis (4), such that the at least one driver element (14) is displaceable relative to the first plate (16) and the second plate (17).

2. The friction clutch (1) according to claim 1, wherein only the first plate (16) is permanently interlockingly connected to the inner cage (5) or the outer cage (8).

3. The friction clutch (1) according to claim 2, wherein when there is a switched frictional connection (10) at least between the inner plate (7) and the outer plate (9) and when the torque difference is present, the second plate (17) is rotatable together with a friction partner (18) in the circumferential direction (6) from an initial position (19) of the interlocking unit (11) relative to the first plate (16) by means of a frictional connection (10) with the friction partner (18), wherein as a result of this rotation (20) the at least one driver element (14) is displaceable in the radial direction (15).

4. The friction clutch (1) according to claim 3, wherein the at least one driver element (14) is guided in at least one of the first plate (16) and the second plate (17).

5. The friction clutch (1) according to claim 4, wherein the at least one driver element (14) is guided in such a way that, in the initial position (19), a displacement (13) of the driver element (14) in the radial direction (15) is prevented by a centrifugal force (21).

6. A hybrid module (25) for a drive train (26) of a motor vehicle (27), at least comprising a friction clutch (1) according to any one of the preceding claims and an electric drive (28) with a rotor (29) and a stator (30), wherein the rotor (29) is connected in a torque-transmitting manner to the input side (2) or the output side (3) of the friction clutch (1); wherein the electric drive (28) is arranged coaxially to the friction clutch (1) or axially parallel to the friction clutch (1).

## Revendications

1. Embrayage à friction (1) pour la transmission de couples entre un côté entrée (2) et un côté sortie (3), comprenant au moins un axe de rotation (4), au moins un disque intérieur (7) relié par complémentarité de forme à un panier intérieur (5) par rapport à une direction périphérique (6) et au moins un disque extérieur (9) relié par complémentarité de forme à un panier extérieur (8) par rapport à la direction périphérique (6), le disque intérieur (7) et le disque extérieure(9) étant agencés l'un derrière l'autre le long de l'axe de rotation (4), une liaison par friction (10) pouvant être réalisée au moins entre les disques (7, 9) par rapport à la direction périphérique (6) de manière commutable, une unité de complémentarité de forme (11) étant en outre prévue, laquelle est reliée par complémentarité de forme de manière durable à l'un des paniers intérieur (5) et extérieur (8) par rapport à la direction périphérique (6) et qui, en fonction d'une différence de couple entre le côté entrée (2) et le côté sortie (3), forme au moins une liaison par complémentarité de forme (12) par rapport à la direction périphérique (6) avec l'autre des paniers extérieur (8) et intérieur (5), l'au moins une liaison par complémentarité de forme (12) pouvant être réalisée par un déplacement (13) d'un élément d'entraînement (14) de l'unité de complémentarité de forme (11) au moins le long d'une direction radiale (15), l'unité de complémentarité de forme (11) présentant au moins un premier disque (16) et un second disque (17) ainsi qu'entre ces disques (16, 17) l'au moins un élément d'entraînement (14), **caractérisé en ce que** l'unité de complémentarité de forme (11) comprend en outre au moins un élément intermédiaire (22) qui présente au moins un ressort de compression (24) agissant dans la direction périphérique (6), grâce auquel le premier disque (16) et le second disque (17) sont agencés dans une position initiale (19), et qui garantit un écart (23) entre le premier disque (16) et le second disque (17) le long de l'axe de rotation (4), de façon à pouvoir déplacer l'au moins un élément d'entraînement (14) par rapport au premier disque (16) et au second disque (17).

2. Embrayage à friction (1) selon la revendication 1, dans lequel seul le premier disque (16) est relié en permanence par complémentarité de forme au panier intérieur (5) ou au panier extérieur (8).

3. Embrayage à friction (1) selon la revendication 2, dans lequel, en présence d'une liaison par friction commutée (10), au moins entre le disque intérieur (7) et le disque extérieur (9) et en présence d'une différence de couple, le second disque (17) peut être tourné par rapport au premier disque (16) par l'intermédiaire d'une liaison par friction (10) avec un partenaire de friction (18) conjointement avec le partenaire de friction (18) dans la direction périphérique (6) à partir d'une position initiale (19) de l'unité de complémentarité de forme (11), l'au moins un élément d'entraînement (14) pouvant être déplacé dans la direction radiale (15) suite à cette rotation (20).

4. Embrayage à friction (1) selon la revendication 3, dans lequel l'au moins un élément d'entraînement (14) est guidé dans au moins l'un des premier disque (16) et second disque (17).

5. Embrayage à friction (1) selon la revendication 4, dans lequel l'au moins un élément d'entraînement (14) est guidé de façon à empêcher par une force centrifuge (21), dans la position initiale (19), un déplacement (13) de l'élément d'entraînement (14) dans la direction radiale (15).

6. Module hybride (25) pour une chaîne cinématique (26) d'un véhicule automobile (27), comprenant au moins un embrayage à friction (1) selon l'une quelconque des revendications précédentes ainsi qu'un entraînement électrique (28) avec un rotor (29) et un stator (30), le rotor (29) étant relié au côté entrée (2) ou au côté sortie (3) de l'embrayage à friction (1) par transmission de couple ; l'entraînement électrique (28) étant agencé coaxialement à l'embrayage à friction (1) ou parallèlement à l'axe de l'embrayage à friction (1).
